# EUROPÄISCHE PATENTSCHRIFT

(11) **EP 1 648 201 B1**
(45) Veröffentlichungstag und Bekanntmachung des Hinweises auf die Patenterteilung: **27.05.2009**
(21) Anmeldenummer: 05017925.8
(22) Anmeldetag: 18.08.2005
(51) Int. Cl.: H05B 6/02, C21D 9/32, C21D 1/10

(54) **Verfahren zum Oberflächenvergüten metallischer Werkstücke durch induktive Wärmebehandlung**
Method for hardening of above surfaces of metallic work objects through heat treatment
Procédé de trempe de surfaces supérieures d'objets métalliques à usiner à l'aide d' un traitemement inductif.

(30) Priorität: 15.10.2004 DE 102004050500
(43) Veröffentlichungstag der Anmeldung: 19.04.2006
(73) Patentinhaber: EFD Induction GmbH, 79106 Freiburg (DE)
(72) Erfinder: Zernickel, Reinhard, 79183 Waldkirch (DE); Wagner, Josef, 79359 Riegel (DE)
(74) Vertreter: Goy, Wolfgang

(56) Entgegenhaltungen:
- DE-C1- 10 141 645
- US-A- 4 251 705
- US-B1- 6 296 721

## Beschreibung

Die Erfindung betrifft ein Verfahren zum Oberflächenvergüten metallischer Werkstücke durch induktive Wärmebehandlung nach dem Oberbegriff des Anspruchs 1.

Die induktive Wärmebehandlung stellt eine Methode dar, um die Oberfläche von metallischen Werkstücken zu härten. Das Grundprinzip besteht darin, daß durch ein von außen angelegtes Magnetfeld in dem zu behandelnden Werkstück induktiv Wärme erzeugt wird.

Das erfindungsgemäße Verfahren ist für Werkstücke gedacht, wenn der Induktor das Werkstück um dessen Umfangskontur herum Schritt für Schritt bereichsweise wärmebehandelt und dabei immer rechtwinklig zur Oberflächenbahn verlaufen muß, um so einen gleichmäßigen Erwärmungsverlauf zu erzielen. Dies ist beispielsweise bei der Härtung von Zahnrädern oder Kurvenverläufen oder anderen vergleichbaren Werkstücken mit ähnlichen Bearbeitungsaufgaben der Fall. Die Zahnräder sowie die Kurvenverläufe können in den unterschiedlichsten Variationen beispielsweise hinsichtlich der Verzahnung ausgebildet sein.

Grundsätzlich ist es zum Oberflächenvergüten metallischer Werkstücke der vorbeschriebenen Art durch induktive Wärmebehandlung bekannt, das Werkstück auf einem sogenannten Spindelstock aufzuspannen. Mittels eines Antriebs wird der Spindelstock Schritt für Schritt gedreht, wobei in den Stillstandsphasen das Werkstück mittels eines Induktors bereichsweise wärmebehandelt wird. Beispielsweise wird bei Zahnrädern jeder Zahn bzw. jeder Zwischenraum zwischen zwei Zähnen gehärtet. Zum Härten wird der Induktor an das Werkstück herangefahren. In der US 4 251 705 A1 ist ein solches Verfahren beschrieben.

Das Problem bei dem bekannten Verfahren besteht darin, daß das Werkstück mit seiner Achse nicht immer exakt in der Drehachse des Spindelstocks liegt, so daß eine Exzentrizität vorliegt. Um die Zentrizität einigermaßen einzustellen, kann das Werkstück etwas von Hand oder durch ein Werkzeug auf dem Spindelstock verschoben werden. Es kommt dabei jedoch immer noch zu gewissen Exzentrizitäten mit der Folge, daß sich der Induktor nie in der exakten Soll-Position befindet, sondern daß es exzentrische Positionsabweichungen gibt. Dies kann jedoch zu unterschiedlichen Erwärmungen und in der Folge davon zum Wärmeverzug des Werkstücks führen.

Davon ausgehend liegt der Erfindung die Aufgabezugrunde, das Verfahren zum Oberflächenvergüten metallischer Werkstücke durch induktive Wärmebehandlung der eingangs angegebenen Art derart weiterzuentwickeln, daß auf schnelle Art und Weise sehr exakt das Werkstück reproduzierbar gehärtet werden kann.

Die technische L ö s u n g ist gekennzeichnet durch die Merkmale im Kennzeichen des Anspruchs 1.

Dadurch ist ein konzentrischer Werkstückmaschinen-Achsenausgleich bei exzentrisch aufgespannten Werkstücken bei der induktiven Härtung dieser Werkstücke geschaffen. Die Werkstücke, welche exzentrisch auf dem Spindelstock einer Induktionshärtemaschine aufgespannt sind, werden mittels der erfindungsgemäßen Verfahrensdurchführung zentrisch durch einen Achsenausgleich der NC-Steuerung bearbeitbar. Dies ist die notwendige Voraussetzung dafür, wenn der Induktor immer rechtwinklig zur Oberflächenbahn des Werkstücks verlaufen muß. Dadurch ist ein gleichmäßiger Erwärmungsverlauf gewährleistet, beispielsweise für die Härtung von Zahnrädern, Kurvenverläufen und anderen vergleichbaren Bearbeitungsaufgaben. Erfindungsgemäß werden in einem ersten Hauptschritt zunächst die Werkstücksmaße aufgenommen. Bezugspunkt bei der Aufnahme dieser Werkstücksmaße ist dabei die Drehachse des Spindelstocks, um welchen bei der nachfolgenden Induktionshärtung das Werkstück gedreht wird. Aus den gewonnen Meßdaten errechnet die NC-Steuerung mittels einer geeigneten Syntax zunächst den wahren Durchmesser des Werkstücks, weil es herstellungsbedingte Abweichungen zwischen dem Ist-Durchmesser und dem Soll-Durchmesser des Werkstücks kommen kann. Nach der Berechnung des richtigen Durchmessers des Werkstücks werden durch eine geeignete Arithmetik in der NC-Steuerung der exzentrische Versatz (in mm) und der kartesische Versatz (in Winkelgrad) berechnet. Werden die zuvor genannten Meßdaten auf die Härtung des Werkstücks, beispielsweise bei einem Zahnrad auf die Zahnhärtung übertragen, berechnet die NC-Steuerung die geeigneten Korrekturmaße für den Induktor und verfährt diesen Induktor an die berechnete Soll-Position, so daß in dem zweiten Hauptschritt die Härtung durchgeführt werden kann. Diese Position des Induktors ist dabei dergestalt, daß er radial bezüglich der Achse des Werkstücks ausgerichtet ist und somit zwischen dem Werkstück und dem Induktor die relative Soll-Position gewährleistet ist.

Vorzugsweise wird gemäß der Weiterbildung in Anspruch 2 die Umfangskontur des Werkstücks in radialer Richtung zur Drehachse des Spindelstocks gemessen. Die Messung erfolgt dabei grundsätzlich mittels einer geeigneten Meßvorrichtung.

Die Weiterbildung gemäß Anspruch 3 schlägt vor, daß die Umfangskontur des Werkstücks durch Messen von wenigstens 3 Meßpunkten bestimmt wird. Zur Erhöhung der Genauigkeit können noch mehr Meßpunkte verwendet werden.

Die Weiterbildung gemäß Anspruch 4 schlägt vor, daß mittels einer geeigneten Arithmetik in der NC-Steuerung - wie bereits ausgeführt - der exzentrische Versatz (in mm) und der kartesische Versatz (in Winkelgrad) berechnet wird. Grundlage ist dabei das vom Spindelstock aufgespannte Koordinatensystem.

Schließlich schlägt die Weiterbildung gemäß Anspruch 5 vor, daß der Induktor bezüglich zweier zueinander senkrecht stehender Richtungen verfahrbar ist. Dadurch ist erreicht, daß in jeder Position des Werkstücks bezüglich zum Spindelstock der Induktor exakt radial an den zu härtenden Bereich des Werkstücks herangefahren werden kann.

Ein Ausführungsbeispiel der Erfindung wird nachfolgend anhand der Zeichnungen beschrieben. In diesen zeigt:
- Fig. 1a bis 1d: das Aufnehmen der Werkstücksmaße in aufeinanderfolgenden Schritten;
- Fig. 2a bis 2d: der Härtevorgang des Werkstücks in aufeinanderfolgenden Schritten.

Die Vorrichtung zum Oberflächenvergüten eines metallischen Werkstücks 1 in Form eines Zahnrades durch induktive Wärmebehandlung der Zähne dieses Zahnrades weist einen Spindelstock 2 auf, auf welchem das Werkstück 1 aufgespannt ist. Dieser Spindelstock 2 definiert eine Drehachse 3, um welche herum der Spindelstock 2 mittels eines entsprechenden Antriebs drehbar ist. Der Mittelpunkt des Werkstücks 1 definiert eine Achse 4.

### Das Verfahren zum Oberflächenvergüten des Werkstücks 1 funktioniert wie folgt:

In einem ersten Hauptschritt werden zunächst die Maße des Werkstücks 1 aufgenommen. Diese Maße werden grundsätzlich in Richtung Drehachse 3 des Spindelstocks 2 aufgenommen. Es sind mindestens 3 Messungen notwendig. Die Gradeinteilung kann in festen Schritten (beispielsweise alle 60°) oder in einer willkürlichen Gradzahlreihenfolge (notwendig beispielsweise bei einer Zahnradbearbeitung) festgelegt werden.

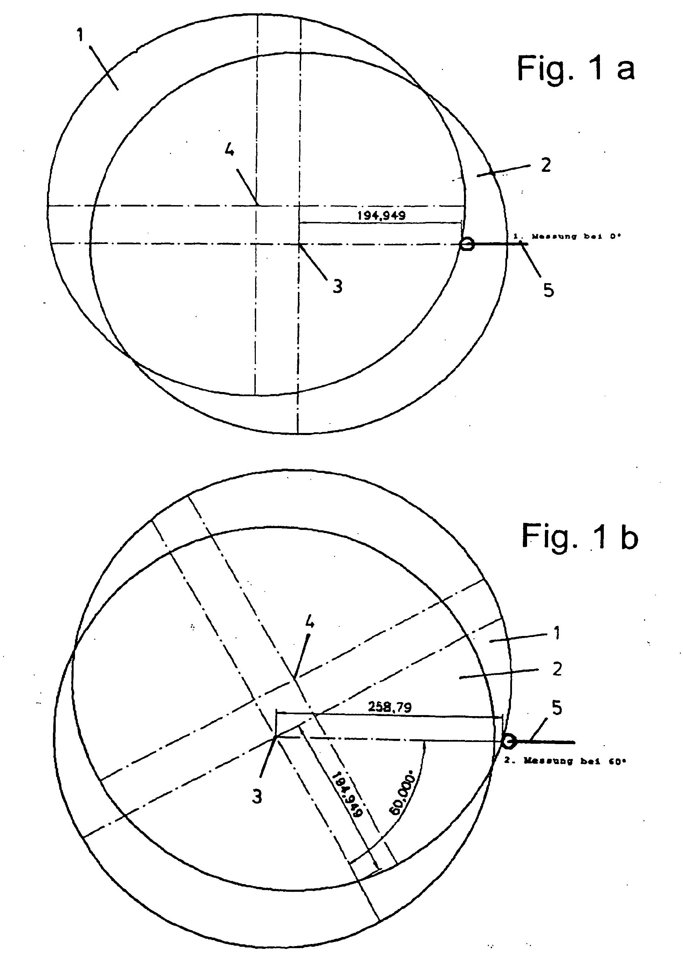

Im dargestellten Ausführungsbeispiel wird zunächst bei Spindelstockstellung 0° mittels einer NC-Meßdatenaufnahme das 1. Maß ermittelt (Fig. 1a). Ein Meßfühler 5 mißt genau in Richtung der Drehachse 3 des Spindelstocks 2 die Durchmesserkontur des Werkstücks 1 (der Werkstückdurchmesser im Ausführungsbeispiel beträgt 500 mm). Das hier ermittelte Maß und alle folgenden Meßdaten werden in einer NC-Steuerung zwischengespeichert. In dem Ausführungsbeispiel sind es bei Spindelstockstellung 0° 194,949 mm.

Nach diesem Meßvorgang wird der Spindelstock 2 um 60° weitergetaktet (Fig. 1b). An der Spindelstockstellung 60° wird mittels des Meßfühlers 5 das 2. Maß aufgenommen, wobei auch hier der Meßfühler 5 wieder exakt in Richtung Drehachse 3 des Spindelstocks 2 ausgerichtet ist. Als Maß wird 258,79 mm ermittelt.

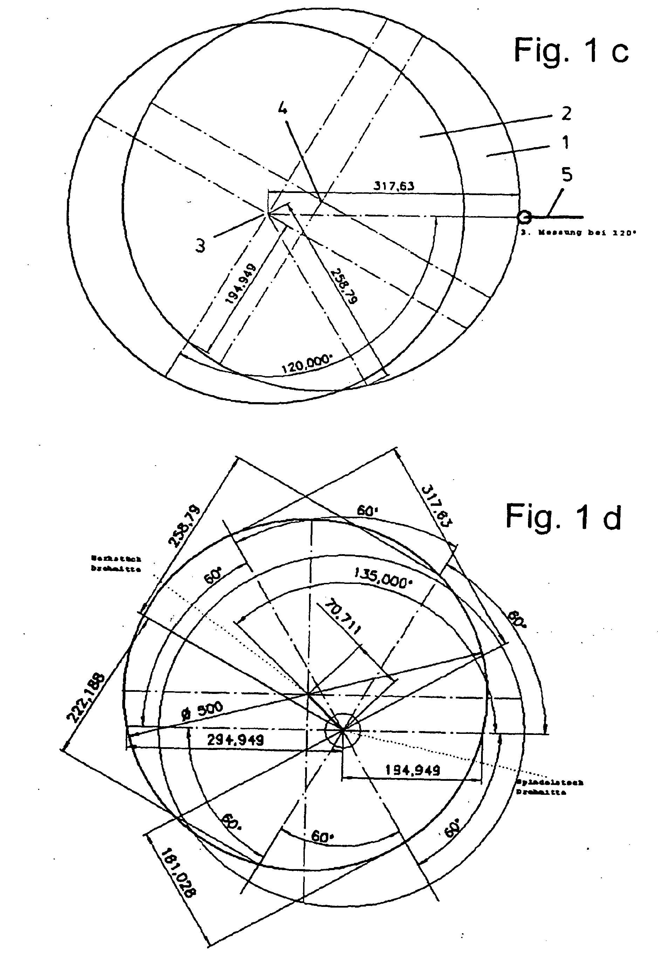

Die Meßfolge geht so weiter. Bei Spindelstockstellung 120° (Fig. 1c) wird das Maß 317,63 mm gemessen.

Es werden noch drei weitere Messungen durchgeführt. Die Zusammenstellung dieser insgesamt 6 Messungen sind Fig. 1d dargestellt.

Aus diesen Meßdaten errechnet die NC-Steuerung mittels einer geeigneten Syntax den zunächst den wahren Durchmesser des Werkstücks 1, da es aufgrund von Fertigungstoleranzen zu Abweichungen kommen kann. Nach der Berechnung dieses wahren Durchmessers des Werkstücks 1 werden durch eine geeignete Arithmetik in der NC-Steuerung der exzentrische Versatz und der kartesische Versatz berechnet. Im dargestellten Ausführungsbeispiel beträgt der exzentrische Versatz 70,711 mm und der kartesische Versatz 135° bei der Spindelstockstellung 0°.

Die ermittelten Meßdaten werden auf die Zahnhärtung des Zahnrades übertragen. Die NC-Steuerung berechnet dabei die geeigneten Korrekturmaße zum Positionieren des Induktors 6.

### Die eigentliche Härtung des zweiten Hauptschrittes geschieht folgendermaßen:

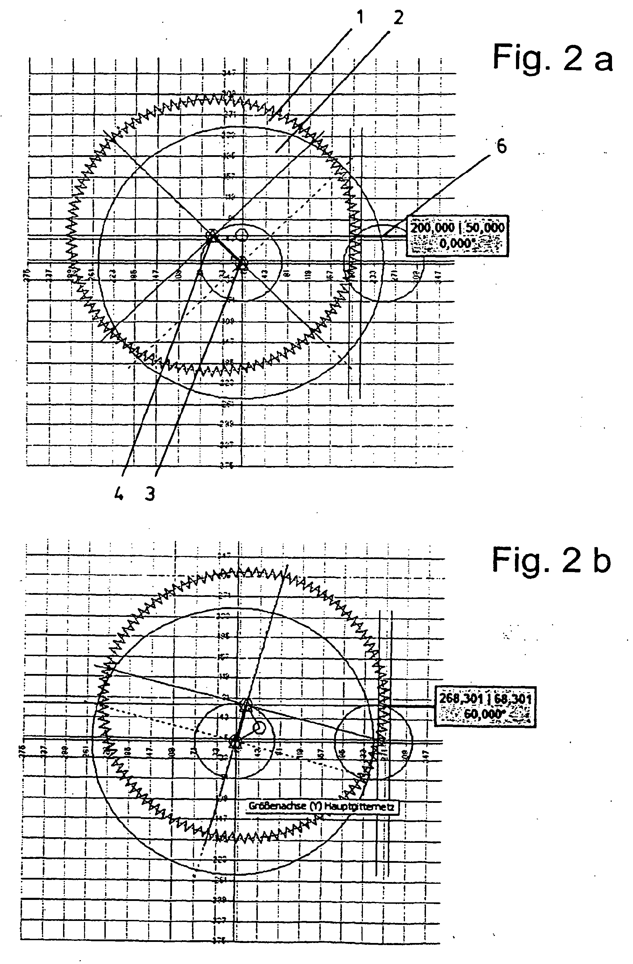

In Fig. 2a ist die Spindelstockstellung 0° dargestellt. Der Induktor 6 ist in der Zeichnung längs der beiden X- sowie Y-Achsen der Maschine derart verfahrbar, daß der Induktor 6 radial auf die Achse 4 des Werkstücks 1 zeigt und an den entsprechenden Zahn des Zahnrades herangefahren wird. In dieser Position kann die induktive Wärmebehandlung durchgeführt werden.

Grundsätzlich könnte nunmehr der nächste Zahn des Zahnrads gehärtet werden, indem der Spindelstock 2 entsprechend weitergetaktet wird. Im dargestellten Ausführungsbeispiel wird jedoch der Spindelstock 2 (und damit das Werkstück 1) um 60° weitergetaktet. Der Induktor 6 wird nunmehr wiederum so lange längs der X- sowie Y-Achsen verfahren, bis er radial auf die Achse 4 des Werkstücks 1 zeigt.

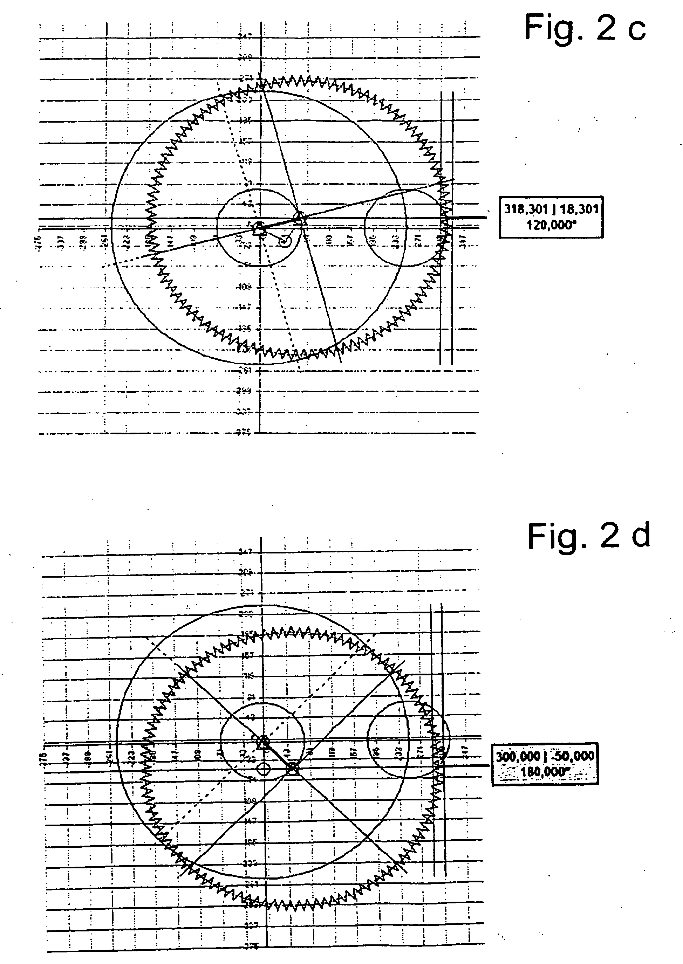

Die Fig. 2c sowie 2d zeigen weitere Verfahrensschritte bei Spindelstockstellung 120° sowie Spindelstockstellung 180°.

Das Verfahren wird so lange weitergeführt, bis sämtliche Zähne des Zahnrads auf diese Weise gehärtet sind, indem jedesmal nach dem entsprechenden Taktvorschub des Spindelstockes 2 der Induktor 6 derart positioniert wird, daß er radial auf die Achse 4 des Werkstücks 1 ausgerichtet ist und an den Zahn herangeführt wird. Die NC-Steuerung berechnet nach der vorbeschriebenen Methode alle Achsstellungen für jeden Zahn.

Durch diese NC-Achsenberechnung ist gewährleistet, daß alle Zähne des Werkstücks 1 grundsätzlich konzentrisch (aus der Sicht des Werkstücks 1) angesteuert werden, so daß das Härteergebnis in jeder Hinsicht reproduzierbar ist.

### B e z u g s z e i c h e n l i s t e

- 1: Werkstück
- 2: Spindelstock
- 3: Drehachse
- 4: Achse
- 5: Meßfühler
- 6: Induktor

## Patentansprüche

1. Verfahren zum Oberflächenvergüten metallischer Werkstücke (1) durch induktive Wärmebehandlung,
wobei das auf einem Spindelstock (2) angeordnete Werkstück (1) Schritt für Schritt um die Drehachse (3) des Spindelstocks (2) gedreht wird und
wobei während der Stillstandsphasen das Werkstück (1) mittels eines heranfahrbaren Induktors (6) bereichsweise wärmebehandelt wird,
**dadurch gekennzeichnet,**
**daß** vor Durchführung der induktiven Wärmebehandlung zunächst die gesamte Umfangskontur des bereits auf dem Spindelstock (2) angeordneten Werkstücks (1) bezüglich der Drehachse (3) des Spindelstocks (2) gemessen und als Datensatz gespeichert wird und
**daß** anschließend die induktive Wärmebehandlung durchgeführt wird, indem der Induktor (6) nach jedem Schritt des Werkstücks (1) auf der Grundlage dieses Datensatzes derart verfahren wird, daß er bezüglich der Achse (4) des Werkstücks (1) radial ausgerichtet ist.

2. Verfahren nach Anspruch 1,
**dadurch gekennzeichnet,**
**daß** die Umfangskontur des Werkstücks (1) in radialer Richtung zur Drehachse (3) des Spindelstocks (2) gemessen wird.

3. Verfahren nach einem der vorhergehenden Ansprüche,
**dadurch gekennzeichnet,**
**daß** die Umfangskontur des Werkstücks (1) durch Messen von wenigstens drei Meßpunkten bestimmt wird.

4. Verfahren nach einem der vorhergehenden Ansprüche,
**dadurch gekennzeichnet,**
**daß** aus dem Datensatz der exzentrische Versatz und der kartesische Versatz der Achse (4) des Werkstücks (1) bezüglich der Drehachse (3) des Spindelstocks (2) berechnet wird.

5. Verfahren nach einem vorhergehenden Ansprüche,
**dadurch gekennzeichnet,**
**daß** der Induktor (6) bezüglich zweier zueinander senkrecht stehender Richtungen verfahrbar ist.

## Claims

1. Method for surface treatment of metal workpieces (1) by inductive heat treatment,
wherein the workpiece (1) arranged on a headstock (2) is turned step by step about the rotary axis (3) of the headstock (2), and
wherein during the stationary phases, the workpiece (1) is heat-treated in zones by means of a mobile inductor (6),
**characterised in that**
before performing the inductive heat treatment, first the entire peripheral contour of the workpiece (1) which is already arranged on the headstock (2) is measured in relation to the rotary axis (3) of the headstock (2) and saved as a data record, and
**in that** the inductive heat treatment is then performed, **in that** the inductor (6), after each step of the workpiece (1), is moved on the basis of this data record such that it is aligned radially in relation to the axis (4) of the workpiece (1).

2. Method according to claim 1, **characterised in that** the peripheral contour of the workpiece (1) is measured in the radial direction to the rotary axis (3) of the headstock (2).

3. Method according to any of the preceding claims, **characterised in that** the peripheral contour of the workpiece (1) is determined by measurement of at least three measurement points.

4. Method according to any of the preceding claims, **characterised in that** from the data record, the eccentric offset and the Cartesian offset of the axis (4) of the workpiece (1) to the rotary axis (3) of the headstock (2) is calculated.

5. Method according to any of the preceding claims, **characterised in that** the inductor (6) is movable in two directions perpendicular to each other.

## Revendications

1. Procédé de traitement de surface de pièces métalliques (1) par traitement thermique par induction,
dans lequel la pièce (1) disposée sur une poupée (2) est tournée pas à pas autour de l'axe de rotation (3) de la poupée (2) et
dans lequel, pendant les phases d'arrêt, la pièce (1) subit un traitement thermique sectoriel au moyen d'un inducteur (6) pouvant être approché,
**caractérisé en ce**
**qu'**avant exécution du traitement thermique par induction, tout le contour périphérique de la pièce (1) déjà disposée sur la poupée (2) est d'abord mesuré par rapport à l'axe de rotation (3) de la poupée (2) et enregistré comme jeu de données et
**qu'**ensuite le traitement thermique par induction est effectué en déplaçant l'inducteur (6) après chaque pas de la pièce (1) sur la base de ce jeu de données de telle façon que celui-ci soit orienté radialement par rapport à l'axe (4) de la pièce (1).

2. Procédé selon la revendication 1,
**caractérisé en ce**
**que** le contour périphérique de la pièce (1) est mesuré en direction radiale par rapport à l'axe de rotation (3) de la poupée (2).

3. Procédé selon l'une des revendications précédentes,
**caractérisé en ce**
**que** le contour périphérique de la pièce (1) est déterminé par mesure d'au moins trois points de mesure.

4. Procédé selon l'une des revendications précédentes,
**caractérisé en ce**
**que** le décalage excentrique et le décalage cartésien de l'axe (4) de la pièce (1) par rapport à l'axe de rotation (3) de la poupée (2) sont calculés à partir du jeu de données.

5. Procédé selon l'une des revendications précédentes,
**caractérisé en ce**
**que** l'inducteur (6) est déplaçable par rapport à deux directions perpendiculaires l'une à l'autre.
